# EUROPÄISCHE PATENTSCHRIFT

(11) **EP 0 620 374 B1**
(45) Veröffentlichungstag und Bekanntmachung des Hinweises auf die Patenterteilung: **08.11.1995**
(21) Anmeldenummer: 94810203.3
(22) Anmeldetag: 11.04.1994
(51) Int. Cl.: F16B 13/08

(54) **Befestigungselement mit Ankerbolzen und Spreizkeil**
Fastening element with anchor bolt and expansion wedge
Elément de fixation avec boulon d'autrage et coin d'écartement

(30) Priorität: 14.04.1993 DE 4312140
(43) Veröffentlichungstag der Anmeldung: 19.10.1994
(73) Patentinhaber: HILTI Aktiengesellschaft, 9494 Schaan (LI)
(72) Erfinder: Herb, Armin, D-86974 Apfeldorf (DE)
(74) Vertreter: Wildi, Roland

(56) Entgegenhaltungen:
- EP-A- 0 040 300
- EP-A- 0 283 720

## Beschreibung

Die Erfindung betrifft ein Befestigungselement mit Ankerbolzen und Spreizkeil, wobei der Ankerbolzen in einem ersten Endbereich mit einem als Flansch ausgebildeten Angriffsteil zur Lastaufnahme versehen ist, der eine Durchgangsbohrung für den Spreizkeil aufweist sowie in einem dem ersten Endbereich gegenüberliegenden zweiten Endbereich eine Keilfläche besitzt, die sich zum freien Ende des zweiten Endbereiches hin der Umfangskontur des Ankerbolzens nähert und entlang welcher der Spreizkeil zur Verspreizung verschiebbar ist und der Spreizkeil in ungespreiztem Zustand des Befestigungselementes mit der Wandung der Durchgangsbohrung des Angriffsteils in Verbindung steht.

Befestigungselemente der in Rede stehenden Art dienen insbesondere dem Abhängen von Zwischendecken, Verkleidungen, Gerüsten, Rohren, Leitungen und dergleichen. Da diese Befestigungselemente in grossen Stückzahlen Anwendung finden, wird daran insbesondere die Forderung gestellt, dass sie wirtschaftlich herstellbar sind und unter geringstem Zeitaufwand und ohne besonderen Aufwand hinsichtlich Werkzeug gesetzt werden können. Die Befestigungselemente sind derart aufgebaut, dass ein Teil als Ankerbolzen ausgebildet ist, welcher der Aufnahme der abzuhängenden Last dient. Entlang einer am Ankerbolzen angeordneten Keilfläche lässt sich bei den bekannten Befestigungselementen ein Spreizkeil verschieben. Nach Erzeugen einer Verspreizung sitzt das Befestigungselement in einer vorbereiteten Aufnahmebohrung, beispielsweise in einer Decke fest. Erfolgt ein Kraftangriff an dem Ankerbolzen durch die abzuhängende Last, so erfolgt zudem eine Nachspreizung des Befestigungselementes.

Aus der EU-PS 0 283 720 ist ein Befestigungselement bekannt, welches aus einem Ankerbolzen und einem Spreizkeil besteht. Der Ankerbolzen besitzt eine Keilfläche, entlang weicher der Spreizkeil beim Verspreizen des Befestigungselementes axial verschiebbar ist und ein flanschartiges Angriffsteil mit einer Durchgangsöffnung, in welcher der Spreizkeil geführt ist. Der Spreizkeil weist zwei Vorsprünge auf, die bei der Vormontage des Befestigungselementes, d.h. beim Zusammenfügen von Ankerbolzen und Spreizkeil der Verklemmung des Spreizkeils gegenüber dem Ankerbolzen innerhalb der Durchgangsöffnung im flanschartigen Angriffsteil des Befestigungselementes dienen. Die Vorsprünge überragen vor der Vormontage die Wandung der Durchgangsöffnung im flanschartigen Angriffsteil wenigstens teilweise radial und erfahren bei der Vormontage des Spreizkeils im Rahmen der Verklemmung an dem Ankerbolzen eine geringfügige Verformung, wenn die Vorsprünge in Setzrichtung des Befestigungselementes mit der Wandung der Durchgangsbohrung des flanschartigen Angriffsteiles in Kontakt kommen. Dabei kann der Spreizkeil derartig abkippen, dass das setzrichtungsseitige Ende des Spreizkeiles vom Ankerbolzen abhebt und die Aussenkontur des Ankerbolzens radial überragend vom Ankerbolzen absteht. Ein derartig vormontiertes Befestigungselement kann aufgrund des abgehobenen Spreizkeiles nicht in eine vorbereitete Aufnahmebohrung eingesetzt werden, die auf den Durchmesser des Ankerbolzens abgestimmt ist.

Ein weiterer Nachteil bei diesem bekannten Befestigungselement besteht darin, dass speziell bei der Montage in Aufnahmebohrungen an Decken ein selbsttätiges Halten dieses Befestigungselementes in der Aufnahmebohrung nicht gewährleistet ist. Der Anwender muss folglich bis zum Ende des Spreizvorganges darauf achten, dass das Befestigungselement richtig in der Aufnahmebohrung sitzt.

Der Erfindung liegt die Aufgabe zugrunde, ein Befestigungselement der vorstehend genannten Art zu schaffen, bei dem einerseits das setzrichtungsseitige Ende des vormontierten Spreizkeiles die Aussenkontur des Ankerbolzens nicht überragt und andererseits ein selbsttätiges Halten des nicht verspreizten Befestigungselementes in einer senkrecht nach unten offenen Aufnahmebohrung in einer Decke gewährleistet ist.

Erfindungsgemäss wird dies dadurch erreicht, dass der Spreizkeil in Längsrichtung derart bogenförmig ausgebildet ist, dass er im ungespreizten Zustand nur am ersten Endbereich und am zweiten Endbereich da Ankerbolzens anliegt.

Bei der Vormontage wird der Spreizkeil entlang des Ankerbolzens verschoben. Dabei gleitet der setzrichtungsseitige Bereich des Spreizkeiles wenigstens teilweise entlang der Keilfläche des Ankerbolzens. In dieser ungespreizten Position erfolgt eine Festlegung des Spreizkeiles gegenüber dem Ankerbolzen über den Flansch, wobei der setzrichtungsseitige Bereich des Spreizkeiles an der Keilfläche des Ankerbolzens anliegt.

Beim Einsetzen des erfindungsgemässen Befestigungselementes in eine Aufnahmebohrung, die auf den Durchmesser des Ankerbolzens abgestimmt ist, erfolgt eine Rückverformung des bogenförmigen Spreizkeiles. Dabei entsteht eine in radialer Richtung wirkende Vorspannkraft, durch die das Befestigungselement in der Aufnahmebohrung hält. Auf diese Weise wird bei der Montage an Decken ein Herausfallen des eingesetzten, ungespreizten Befestigungselementes aus der Aufnahmebohrung verhindert.

Die Stärke der Vorspannkraft, die mit dem Spreizkeil erzeugt wird, ist abhängig von der Länge, über die sich die bogenförmige Ausbildung des Spreizkeiles erstreckt. Vorzugsweise erstreckt sich die bogenförmige Ausbildung wenigstens über die halbe Länge des Spreizkeils. Je kürzer die bogenförmige Ausbildung des Spreizkeils ist, umso grösser ist die Vorspannkraft, die vom Spreizkeil erzeugt wird.

Die Vorspannkraft hängt ebenfalls davon ab, wie stark der Spreizkeil gebogen ist. Zweckmässigerweise beträgt das durch die bogenförmige Ausbildung entstandene grösste Spiel zwischen Ankerbolzen und Spreizkeil 0,2 bis 1,5 mm. Je grösser das Spiel ist, umso grösser ist die Vorspannkraft in genau gefertigten Aufnahmebohrungen und umso besser hält das Befestigungselement selbständig in Aufnahmebohrungen, die den Solldurchmesser gefingfügig überschreiten.

Die Erfindung wird anhand von Zeichnungen, die ein Ausführungsbeispiel wiedergeben, näher erläutert. Es zeigen:
- Fig.1: ein erfindungsgemässes Befestigungselement;
- Fig. 2: das Befestigungselement gemäss Fig. 1 im ungespreizten Zustand in einer Aufnahmebohrung;
- Fig. 3: das erfindungsgemässe Befestigungselement im gespreizten Zustand.

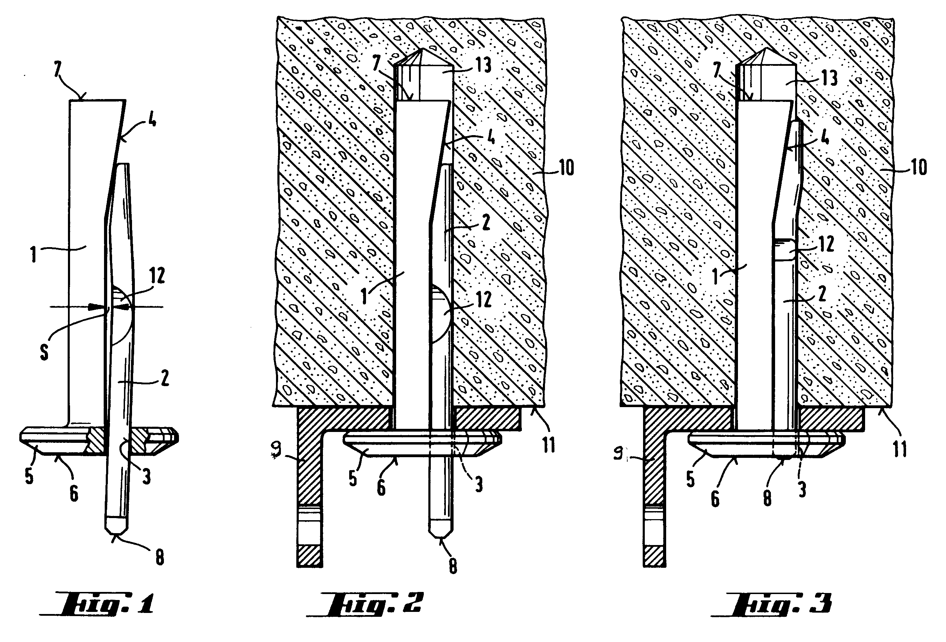

Das in den Fig. 1, 2 und 3 dargestellte Befestigungselement besteht aus einem Ankerbolzen 1 und einem Spreizkeil 2. Der Ankerbolzen 1 weist in einem rückwärtigen ersten Endbereich 6 ein flanschartiges Angriffsteil 5 mit einer Durchgangsöffnung 3 auf, welche der Aufnahme und Führung des gegenüber dem Ankerbolzen 1 verschiebbaren Spreizkeils 2 dient. In einem, dem ersten Endbereich 6 gegenüberliegenden setzrichtungsseitigen, zweiten Endbereich 7 ist der Ankerbolzen 1 mit einer Keilfläche 4 versehen, die sich zum freien Ende des zweiten Endbereiches 7 hin der Umfangskontur des Ankerbolzens 1 nähert. Der Spreizkeil 2 weist einen teilweise halbrund ausgebildeten Querschnitt auf. Zum setzrichtungsseitigen Ende hin verjüngt sich der Spreizkeil 2 zur Aussenkontur hin.

Wie die Fig. 1 zeigt, ist der Spreizkeil 2 in Längsrichtung derart bogenförmig ausgebildet, dass der Spreizkeil 2 im ungespreizten Zustand nur am ersten Endbereich 6 und im zweiten Endbereich 7 am Ankerbolzen 1 anliegt. Das grösste Spiel S zwischen Ankerbolzen 1 und Spreizhülse 2 beträgt 0,2 bis 1,5 mm. Das in Fig. 1 dargestellte Befestigungselement entspricht dem vormontierten Zustand. Der Spreizkeil 2 ragt durch eine Durchgangsöffnung 3 im flanschartigen Angriffsteil 5 und wird im flanschartigen Angriffsteil 5 festgehalten.

Der Spreizkeil 2 ist mit einem Scherbereich 12 versehen, der beim Setzvorgang ein Nachrücken des rückwärtigen Bereiches des Spreizkeiles 2 in Setzrichtung ermöglicht, so dass das rückwärtige Ende 8 des Spreizkeiles 2 gegenüber dem flanschartigen Angriffsteil 5 oberflächenbündig gesetzt werden kann.

Die Fig. 2 zeigt das vormontierte, ungespreizte Befestigungselement in einer vorbereitten Aufnahmebohrung 13 eines Aufnahmewerkstoffes 10. Zwischen der setzrichtungsseitigen Fläche des flanschartigen Angriffsteiles 5 und der Oberfläche 11 des Aufnahmewerkstoffes 10 befindet sich ein Bauteil 9. Die vorbereitete Aufnahmebohrung 13 weist einen Durchmesser auf, der im wesentlichen der Aussenkontur des Ankerbolzens 1 entspricht. Der bogenförmig ausgebildete Spreizkeil 2 liegt unter Vorspannung an der Wandung der Aufnahmebohrung 13 an. Das Befestigungselement ist derartig zusammengedrückt, dass die bogenförmige Ausbildung nicht mehr existiert. Die Querschnitte des Ankerbolzens 1 und des Spreizkeiles 2 ergänzen sich zu einem kreisrunden Querschnitt.

Die Fig. 3 zeigt das Befestigungselement nach dem Spreizvorgang. Das Verspreizen des Befestigungselementes in der Aufnahmebohrung 13 kann beispielsweise unter Zuhilfenahme eines nicht dargestellten Schlagwerkzeuges in Form eines Hammers erfolgen, mit dem auf das rückwärtige Ende 8 des Spreizkeils 2 geschlagen wird, bis das rückwärtige Ende 8 gegenüber der Stirnseite des flanschartigen Angriffsteiles 5 im ersten Endbereich 6 des Ankerbolzens 1 oberflächenbündig ausgerichtet ist. Die bündige Ausrichtung der rückwärtigen Stirnfläche 8 des Spreizkeiles 2 gegenüber dem ersten Endbereich 6 des Ankerbolzens 1 ist ein Mass dafür, dass der Spreizvorgang des Befestigungselementes korrekt ausgeführt worden ist. Durch das Angreifen einer Last am Bauteil 9 wird eine Nachspreizung des Befestigungselementes erreicht.

## Patentansprüche

1. Befestigungselement mit Ankerbolzen (1) und Spreizkeil (2), wobei der Ankerbolzen (1) in einem ersten Endbereich (6) mit einem flanschartigen Angriffsteil (5) zur Lastaufnahme versehen ist, der eine Durchgangsbohrung (3) für den Spreizkeil (2) aufweist sowie in einem, dem ersten Endbereich (6) gegenüberliegenden zweiten Endbereich (7) eine Keilfläche (4) besitzt, die sich zum freien Ende des zweiten Endbereiches (7) hin der Umfangskontur des Ankerbolzens (1) nähert und entlang welcher der Spreizkeil (2) zur Verspreizung verschiebbar ist und der Spreizkeil (2) in ungespreiztem Zustand des Befestigungselementes mit der Wandung der Durchgangsbohrung (3) des flanschartigen Angriffsteils (5) in Verbindung steht,
**dadurch gekennzeichnet**, dass der Spreizkeil (2) in Längsrichtung derart bogenförmig ausgebildet ist, dass er im ungespreizten Zustand nur am ersten Endbereich (6) und zweiten Endbereich (7) des Ankerbolzens (1) anliegt.

2. Befestigungselement nach Anspruch 1, dadurch gekennzeichnet, dass sich die bogenförmige Ausbildung des Spreizkeils (2) wenigstens über die halbe Länge des Spreizkeils (2) erstreckt.

3. Befestigungselement nach Anspruch 1, dadurch gekennzeichnet, dass das durch die bogenförmige Ausbildung entstandene grösste Spiel (S) zwischen Ankerbolzen (1) und Spreizkeil (2) 0,2 bis 1,5 mm beträgt.

## Claims

1. Fastening element with anchor bolt (1) and expansion wedge (2), the anchor bolt (1) being provided, in a first end region (6), with a flange-like application part (5) which is intended for taking up loads and exhibits a through-passage bore (3) for the expansion wedge (2) and having, in a second end region (7) located opposite the first end region (6), a wedge surface (4) which, towards the free end of the second end region (7), comes closer to the circumferential contour of the anchor bolt (1) and along which the expansion wedge (2) can be displaced for expansion purposes, and the expansion wedge (2), in the non-expanded state of the fastening element, being in connection with the wall of the through-passage bore (3) of the flange-like application part (5), characterized in that the expansion wedge (2) is designed in the form of an arc in the longitudinal direction, such that, in the non-expanded state, it rests merely on the first end region (6) and second end region (7) of the anchor bolt (1).

2. Fastening element according to Claim 1, characterized in that the arcuate design of the expansion wedge (2) extends at least over half the length of the expansion wedge (2).

3. Fastening element according to Claim 1, characterized in that the greatest clearance (S), resulting due to the arcuate design, between the anchor bolt (1) and the expansion wedge (2) is from 0.2 to 1.5 mm.

## Revendications

1. Elément de fixation comprenant un boulon d'ancrage (1) et un coin d'expansion (2), le bouton d'ancrage (1) étant pourvu, dans une première zone d'extrémité (6), d'une partie d'attaque en forme de collerette (5) qui est destinée à recevoir une charge et qui comporte un trou traversant (3) pour le coin d'expansion (2) et étant également pourvu, dans une deuxième zone d'extrémité (7) opposée à la première zone d'extrémité (6), d'une surface formant coin (4) qui, en direction de l'extrémité libre de la deuxième zone d'extrémité (7), se rapproche du contour périphérique du bouton d'ancrage (1) et le long de laquelle le coin d'expansion (2) peut coulisser pour réaliser le blocage par expansion, le coin d'expansion (2) étant relié à la paroi du trou traversant (3) de la partie d'attaque en forme de collerette (5) lorsque l'élément de fixation est à l'état non expansé, **caractérisé en ce que**, dans sa direction longitudinale, le coin d'expansion (2) présente une forme arquée, de façon à n'être en contact qu'avec la première zone d'extrémité (6) et la deuxième zone d'extrémité (7) du boulon d'ancrage (1) à l'état non expansé.

2. Elément de fixation selon la revendication 1, caractérisé en ce que la configuration arquée du coin d'expansion (2) occupe au moins la moitié de la longueur du coin d'expansion (2).

3. Elément de fixation selon la revendication 1, caractérisé en ce que le jeu maximal (S) créé par la configuration arquée entre le boulon d'ancrage (1) et le coin d'expansion (2) est compris entre 0,2 et 1,5 mm.
